# EUROPÄISCHE PATENTSCHRIFT

(11) **EP 2 978 983 B1**
(45) Veröffentlichungstag und Bekanntmachung des Hinweises auf die Patenterteilung: **31.01.2018**
(21) Anmeldenummer: 14714975.1
(22) Anmeldetag: 27.03.2014
(51) Int. Cl.: F16C 33/04, F16C 33/20

(54) **AXIAL-RADIAL-GLEITLAGER MIT POLYMERGLEITELEMENTEN UND ENTSPRECHENDES GLEITELEMENT**
AXIAL-RADIAL SLIDE BEARING HAVING POLYMER SLIDE ELEMENTS AND CORRESPONDING SLIDE ELEMENT
PALIER LISSE AXIAL-RADIAL COMPORTANT DES ÉLÉMENTS COULISSANTS EN POLYMÈRE, ET ÉLÉMENT COULISSANT CORRESPONDANT

(30) Priorität: 28.03.2013 DE 202013101374 U
(43) Veröffentlichungstag der Anmeldung: 03.02.2016
(73) Patentinhaber: Igus GmbH, 51147 Köln (DE)
(72) Erfinder: SELZER, Ralf, 53797 Lohmar-Heide (DE)
(74) Vertreter: Lippert Stachow Patentanwälte Rechtsanwälte
(86) Internationale Anmeldenummer: PCT/EP2014/056150
(87) Internationale Veröffentlichungsnummer: WO 2014/154800

(56) Entgegenhaltungen:
- EP-A1- 0 633 986
- EP-A1- 0 906 517
- DE-A1- 1 425 990
- DE-U1- 20 120 266
- DE-U1-202004 006 697
- US-B2- 7 490 992

## Beschreibung

Die Erfindung betrifft allgemein ein kombiniertes Axial-/Radial-Gleitlager mit Polymergleitelementen sowie ein besonders für solche Gleitlager entwickeltes Polymergleitelement.

Ein kombiniertes Axial-/Radial-Gleitlager in Verbundbauweise ist aus dem Patent US 5,509,738 bekannt. Gleitelemente aus einem Polymer, insbesondere aus einem Polyimid, sind hierbei auf Lagerhälften aus Metall befestigt. Zur Bildung einer axialen Gleitfläche in Form einer Kreisscheibe werden eine Vielzahl sektorförmiger Segmente aus Polyimid durch Kleben angebracht. Zur Bereitstellung einer zylindrischen, radialen Gleitfläche werden am Innenumfang der Lagerschalen eine Anzahl gebogener Streifen aus Polyimid eingeklebt. Nachteilig ist z.B., dass die Sektorsegmente und Bogenstreifen den Abmessungen der jeweiligen Lagerschalen angepasst sein müssen. Zudem ist der Herstellungsaufwand des Verbund-Gleitlagers nach US 5,509,738 erheblich.

Die Offenlegungsschrift DE 21 59 801 A betrifft Scharnier-Lagerbuchsen mit einem mehrschichtigen Aufbau aus einer metallischen Stützschicht und einer darauf befindlichen selbstschmierenden Laufschicht aus Kunststoff.

Aus dem Katalog "PolymerGleitlager 06.2005" der Firma igus GmbH ist ein gattungsgemäßes Axial-/Radial-Gleitlager bekannt (s. Seite 50.1-50.2). Dieses Gleitlager, auch als Polymer-Rundtischlager (PRT) bezeichnet, umfasst einen ersten, äußeren Lagerring und einen zweiten, inneren Lagerring, welche aus Metall oder geeignetem Kunststoff gefertigt sind. Die beiden Lagerringe sind gegeneinander um die Lagerachse drehbar. Der zweite, innere Lagerring ist aus zwei Teilen zusammengesetzt und hat einen im Wesentlichen U-förmigen Querschnitt. Hierdurch bildet der zweite Lagerring eine Aufnahme, mit welcher dieser einen inneren Umfangsbereich des ersten Lagerrings aufnimmt.

Dieses Polymer-Rundtisch-Gleitlager umfasst weiterhin Gleitelemente aus einem tribologisch geeigneten Polymer ("Tribopolymer"). Diese Gleitelemente sind zwischen dem ersten und zweiten Lagerring jeweils in ringförmiger Anordnung vorgesehen, um beide Lagerringe axial und radial zu entkoppeln. Die Gleitelemente weisen hierzu jeweils einen im Wesentlichen L-förmigen Querschnitt in der Axialebene auf, sodass axiale Gleitflächen an einem Axialbereich vorgesehen und radiale Gleitflächen an einem Radialbereich vorgesehen sind.

Ein ähnliches Axial-/Radial-Gleitlager ist auch aus der Gebrauchsmusterschrift DE 20 2004 006 697 U1 bereits bekannt und wird als nächstliegender Stand der Technik angesehen.

Vorteile derartiger Gleitlager liegen insbesondere in der geringen Reibung, im wartungsfreien Betrieb, der preisgünstigen Herstellung, der robusten Bauweise und der hohen Verschleißfestigkeit.

Diese positiven Lagereigenschaften werden maßgeblich durch die verwendeten Polymergleitelemente erreicht. Die Gleitelemente werden speziell für jeden gewünschten Lagerdurchmesser passend gefertigt, etwa im Spritzgussverfahren. Dementsprechend gehen mit der Herstellung unterschiedlicher Lagerdurchmesser auch entsprechende Kosten für die Werkzeuge zur Herstellung der Gleitelemente einher. Auch ist ein gewisser Aufwand mit der Lagerverwaltung einer entsprechend hohen Bauteilanzahl verbunden.

Eine Aufgabe der vorliegenden Erfindung liegt mithin darin, die Realisierung unterschiedlicher Lagerdurchmesser mit lediglich einer Geometrie bzw. Bauteilform des Gleitelements zu ermöglichen.

Diese Aufgabe wird erfindungsgemäß durch ein Axial/Radial-Gleitlager gemäß Anspruch 1 sowie unabhängig hiervon auch durch ein entsprechendes Polymergleitelement gemäß Anspruch 7 oder Anspruch 14 gelöst. Hierbei wird als Axial-/Radial-Gleitlager vorliegend sowohl ein Gleitlager für eine Anwendung mit hauptsächlich axialer Belastung, als auch ein Gleitlager für eine Anwendung mit hauptsächlich radialer Belastung verstanden (gelegentlich auch als Radial-/Axial-Gleitlager bezeichnet).

Bei einem gattungsgemäßen Gleitlager gemäß dem Oberbegriff aus Anspruch 1 bzw. einem gattungsgemäßen Polymergleitelement gemäß dem Oberbegriff aus Anspruch 7 ist erfindungsgemäß vorgesehen, dass der Radialbereich der Gleitelemente mindestens eine Scharnierverbindung aufweist, welche zwei Segmente des Radialbereichs flexibel und somit gegeneinander beweglich verbindet. Bereits mit lediglich einer solchen Scharnierverbindung bzw. mit einem Radialbereich, der in lediglich zwei gegeneinander beweglich verbundene Segmente unterteilt ist, lässt sich erzielen, dass sich die Gleitelemente zwischen den Lagerringen an unterschiedliche Durchmesser der Lagerringe anpassen können. Hierbei gestattet die im Radialbereich angeordnete Scharnierverbindung eine je nach Lagerdurchmesser einstellbare Krümmung des Gleitelements um die Lagerachse und folglich das Anbringen des Gleitelements im radialen Spiel zwischen Lagerringen unterschiedlicher Durchmesser.

Bei einem Polymergleitelement gemäß Anspruch 14 ist erfindungsgemäß vorgesehen, dass der Radialbereich eine höhere Flexibilität hat als der Axialbereich und dass der Radialbereich Segmente aufweist, welche gegeneinander beweglich sind. Auch diese Lösung ermöglicht es, eine je nach Lagerdurchmesser einstellbare Krümmung des Gleitelements um die Lagerachse zu erzielen.

Ein Gleitelement mit einer bestimmten vorgegebenen Gleitelementgeometrie kann somit wirkungsvoll zwischen Lagerringen unterschiedlicher Größe, d.h. zumindest für einen bestimmten Bereich unterschiedlicher Lagerdurchmesser, eingesetzt werden.

Eine Veränderung der bekannten Bauweise des ersten und zweiten Lagerrings ist hierbei nicht erforderlich. Die erfindungsgemäßen Gleitelemente eignen sich grundsätzlich zur Verwendung in beliebigen Rundtischlagern, insbesondere solche, bei denen der innen liegende Lagerring einen U-förmigen Querschnitt aufweist und einen scheibenförmigen Außenring lagert. Selbstverständlich eignen sich die Gleitelemente ebenso bei umgekehrter Bauform mit einem außenliegenden U-förmigen Querschnitt. In beiden Fällen weist das Gleitelement einen abgewinkelten, im weitesten Sinne L-förmigen Querschnitt auf, mit zwei quer zueinander stehenden Bereichen, von denen der erste axiale Gleitflächen ausbildet, und deshalb vorliegend als Axialbereich bezeichnet ist, und der zweite radiale Gleitflächen ausbildet, und deshalb vorliegend als Radialbereich bezeichnet ist.

Vorzugsweise ist die Scharnierverbindung im Radialbereich des Gleitelements filmscharnierähnlich hergestellt, d.h. durch einen Bereich mit reduzierter Wandstärke im Vergleich zur übrigen Wandstärke des Gleitelements. Dieser Bereich mit geringerer Wandstärke verbindet jeweils zwei benachbarte, vergleichsweise starre Segmente zumindest des Radialbereichs. Hierdurch wird eine einteilige Herstellung aus lediglich einem Material ermöglicht.

Die Scharnierverbindung lässt sich theoretisch auch durch einen zusätzlichen, flexiblen Kunststoff realisieren, welcher mit einem tribologisch geeigneten Kunststoff in geeigneter Weise gepaart ist, bspw. an diesen angespritzt ist. Die Scharnierverbindung kann alternativ oder ergänzend auch auf andere Weise, etwa durch Materialschwächung z.B. mittels Perforation zwischen beiden Segmenten, erzielt werden.

Der Begriff Scharnierverbindung ist somit vorliegend im weitesten Sinne zu verstehen im Sinne eines Abschnitts, welcher im Vergleich zu den angrenzenden Segmenten innerhalb des Radialbereichs eine höhere Flexibilität aufweist. Diese Flexibilität kann durch zusätzliches Material mit geringerem Elastizitätsmodul erreicht werden. Vorzugsweise wird die zusätzliche Flexibilität durch entsprechende Gestaltung des als Scharnier wirkenden Abschnitts innerhalb eines einstückig aus bewährtem Polymer gefertigten Gleitelements gewonnen.

In betriebsbereiter Anordnung verläuft die Scharnierachse bzw. der Abschnitt höherer Flexibilität bevorzugt im Wesentlichen parallel zur Lagerachse und erstreckt sich über die gesamte axiale Ausdehnung der radialen Gleitflächen bzw. des Radialbereichs. Grundsätzlich könnte der Verlauf der Scharnierverbindung schräg zur Lagerdrehachse vorgesehen sein, er sollte jedoch zumindest eine hinreichend große axiale Komponente aufweisen, um eine einstellbare Krümmung um die Lagerachse zu gestatten.

Um die Verwendung in einem möglichst großen Durchmesserbereich zu gestatten, ist vorzugsweise vorgesehen, dass der Radialbereich eines Gleitelements mehrere erfindungsgemäße Scharnierverbindungen aufweist. Der Radialbereich wird somit vorzugsweise durch mehrere Scharnierverbindungen in eine entsprechende Anzahl flexibler verbundener Segmente unterteilt. Hierdurch kann auch bei einer noch relativ hohen Steifigkeit der Scharnierverbindung, z.B. bei einer möglichst geringen Reduzierung der Wandstärke oder sonstiger Materialschwächung, mit dem Gleitelement insgesamt eine stärkere Krümmung des Radialbereichs um die Lagerdrehachse erzielt werden.

Um die Flexibilität des Radialbereichs in Krümmungs- bzw. Drehrichtung größtmöglich zu gestalten, ist es zweckmäßig, wenn der Radialbereich eines Gleitelements nur über die Länge eines einzigen Segments, etwa zwischen zwei mittleren Scharnierverbindungen, mit dem querstehenden Axialbereich verbunden ist. Auch diese Verbindung zwischen verhältnismäßig starren Segmenten bzw. Bereichen erfolgt vorzugsweise flexibel über eine weitere Scharnierverbindung. Die Achse derartiger weiterer Scharnierverbindungen verläuft vorzugsweise senkrecht zur Achse der erfindungsgemäßen Scharnierverbindungen im Radialbereich.

Je nach Durchmesser des Axial-/Radial-Gleitlagers, in welchem die Gleitelemente verwendet werden, stellt sich naturgemäß zwischen den Axialbereichen benachbarter Gleitelemente ein unterschiedliches Spaltmaß ein. Um durch derartige Spalte entstehende Relativbewegung zwischen den Gleitelementen und hiermit verbundenen Abrieb zu reduzieren oder zu vermeiden, weisen die Axialbereiche der Gleitelemente vorzugsweise Verbinder auf, um die Axialbereiche aneinander zu befestigen. Besonders zweckmäßig sind an den äußeren Ecken angeordnete Formschlussverbinder. Hiermit lassen sich auf einfache Weise gegenüberliegende Kanten benachbarter Gleitelemente lösbar aneinander befestigen. Im Spritzgussverfahren einfach herzustellen sind beispielsweise Haken-Ösen-Schnappverbinder an den Kanten oder Ecken der Axialbereiche.

Besonders vorteilhaft ist es bei erfindungsgemäßen Gleitelementen, eine oder mehrere zusätzliche Verjüngungen bzw. Querschnittsverringerungen in einer Querrichtung verlaufend, insbesondere senkrecht zu der/den Scharnierverbindungen im Radialbereich verlaufend, vorzusehen. Hierdurch kann auch bei steifen Tribopolymeren die Biegsamkeit des Axialbereichs erhöht werden, wodurch erhöhter Verschleiß bzw. unerwünschtes Klemmen durch krümmungsbedingte Wölbung vermieden wird.

Um das in Abhängigkeit des Lagerdurchmessers veränderliche Spaltmaß zwischen Axialbereichen aufeinander folgender Gleitelemente möglichst gering zu halten, ist es zweckmäßig, wenn zumindest die Axialbereiche im Grundriss im Wesentlichen als symmetrisches Trapez ausgeführt sind mit zwei gleichen Schenkeln, die einen verhältnismäßig geringen Winkel einschließen, insbesondere einen Winkel ≤ 20°, vorzugsweise < 15°.

In einer praktisch bevorzugten Ausgestaltung sind zwischen den beiden Lagerringen zwei axial gegenüberliegende Gleitringe aus einer Mehrzahl aneinander gereihter einzelner Polymergleitelemente angeordnet. Zwei Lagerringe aus einzelnen Gleitelementen gestatten eine optimale axiale und radiale Lagerung der Lagerringe gegeneinander. In anderen Fällen, z.B. wenn es maßgeblich auf die radiale Lagerung ankommt, kann jedoch auch durch entsprechende Gestaltung der Radialbereiche, lediglich ein einziger Gleitring aus Polymergleitelementen vorgesehen sein.

In beiden Fällen sind erfindungsgemäße Polymergleitelemente in Umfangsrichtung aufeinander folgend aneinandergereiht, zweckmäßig ohne erhebliche Zwischenspalte bzw. Spiel, und bilden so jeweils annähernd durchgehende scheibenförmige Axial-Lagerflächen und annähernd durchgehende ringförmige Radiallager-Flächen.

Erfindungsgemäße Polymergleitelemente ermöglichen insbesondere die Realisierung von Axial-/Radial-Gleitlagern mit großen Lagerdurchmessern, etwa größer als 250mm, vorzugsweise größer als 500mm. Vorliegend ist mit Lagerdurchmesser der freie Innendurchmesser im innen liegenden Lagerring gemeint. Bei Durchmessern dieser Größenordnung kann in der Regel auch mit bereits bewährten Tribopolymeren auf einfache Weise, z.B. durch filmscharnierähnliche Materialschwächung, die erfindungsgemäße Scharnierverbindung im Zuge der Herstellung erzeugt werden.

Die vorstehend als bevorzugt beschriebenen Ausführungsmerkmale, insoweit diese das Polymergleitelement an sich betreffen, werden jeweils auch unabhängig für das erfindungsgemäße Polymergleitelement als erfindungswesentlich beansprucht. Ein Polymergleitelement gemäß nebengeordnetem Anspruch 10 eignet sich insbesondere, aber nicht ausschließlich, zur Verwendung in Axial/Radial-Gleitlagern, insbesondere Polymer-Rundtischlagern, unterschiedlicher Durchmesser. Durch die Scharnierverbindung kann das erfindungsgemäße Polymergleitelement wahlweise auch in einem Linear-Polymergleitlager eingesetzt werden.

Zusätzlich zum erfindungsgemäß gestalteten Gleitelement betrifft die Erfindung weiterhin die Verwendung eines solchen Gleitelements in einem beliebig gestalteten Axial-/Radial-Gleitlager, insbesondere in einem Gleitlager mit zwei gegeneinander drehbaren Lagerringen beliebiger Gestalt.

Weitere Einzelheiten, Vorteile und Merkmale der Erfindung lassen sich der nachfolgenden näheren Beschreibung eines bevorzugten Ausführungsbeispiels anhand der beigefügten Zeichnungen entnehmen. Hierbei zeigen:
- FIG.1A:: einen Querschnitt entlang der Lagerachse durch ein erfindungsgemäßes Axial-/Radial-Gleitlager mit Polymergleitelementen;
- FIG.1B:: eine Draufsicht auf das Axial-/Radial-Gleitlager;
- FIG.2A:: ein bevorzugtes Ausführungsbeispiel eines erfindungsgemäßen Gleitelements in einer Draufsicht entlang der gedachten Lagerachse;
- FIG.2B:: eine perspektivische Ansicht von einer Seite des Gleitelements aus FIG.2A;
- FIG.2C:: eine perspektivische Ansicht von der anderen Seite des Gleitelements aus FIG.2A.

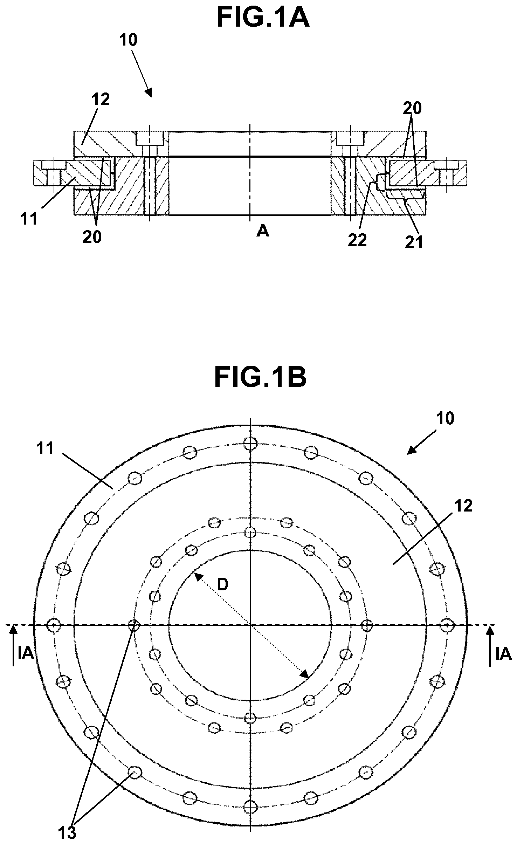

In FIG.1A-1B ist ein Axial-Radial-Gleitlager allgemein mit 10 bezeichnet. Es umfasst einen ersten Lagerring 11 und einen zweiten Lagerring 12, welche in an sich bekannter Weise gefertigt sind, typischerweise beide aus Metall, z.B. aus Aluminium. Einer von beiden, oder beide Lagerringe 11, 12 können auch aus einem geeigneten Kunststoff hergestellt sein. Der zweite Lagerring 12 ist im gezeigten Beispiel als Innenring ausgeführt und hat einen im Wesentlichen U-förmigen Querschnitt. Hierdurch bildet der zweite Lagerring 12 eine Aufnahme, in welcher der radial innen liegende Bereich des ersten Lagerrings 11 vollumfänglich aufgenommen ist. Der zweite Lagerring 12 ist, wie am besten aus FIG.1A ersichtlich, aus zwei durch Schraubverbindung aneinander geflanschte Teile zusammengesetzt. Der erste Lagerring 11 ist im gezeigten Beispiel als Außenring und einstückig ausgeführt. Durch entsprechendes Spiel bzw. Spaltmaß zwischen beiden Lagerringen 11, 12 sind diese relativ zueinander um die Lagerachse A drehbar. Beide Lagerringe 11, 12 weisen axiale Bohrungen 13 auf zur Befestigung der drehbar zu verbindenden, nicht näher gezeigten Teile. Bezüglich weiterer an sich bekannter Merkmale geeigneter Lagerringe 11, 12 wird auf den eingangs genannten Stand der Technik verwiesen.

FIG.1A zeigt ferner Gleitelemente 20 aus einem Tribopolymer, welche zwischen dem ersten und zweiten Lagerring 11, 12, genauer im Bereich der Aufnahme im zweiten Lagerring 12, angeordnet sind. Jeweils eine Mehrzahl in Umfangsrichtung aufeinanderfolgender Gleitelemente 20 bilden hierbei zwei gegenüberliegende Gleitringe, welche die Lagerringe 11, 12 axial und radial entkoppeln und Gleitflächen für diese bilden. Zu diesem Zweck haben die Gleitelemente 20 in der Querschnittsebene, welche die Drehachse A enthält (s. FIG.1A), jeweils einen näherungsweise L-förmigen Querschnitt mit einem Axialbereich 21 und einem gegenüber dem Axialbereich 21 quer, insbesondere im Wesentlichen senkrecht, abgewinkelten Radialbereich 22.

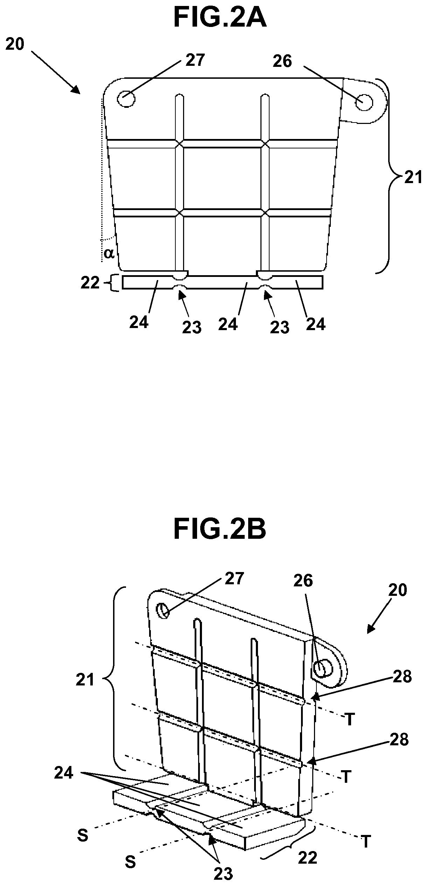

Ein erfindungsgemäßes Gleitelement 20 ist in FIG.2A-2C näher dargestellt. Das Gleitelement 20 ist aus einem tribologisch für die axiale und radiale Lagerung der Lagerringe 11, 12 geeigneten Polymer hergestellt, vorzugsweise einstückig im Spritzgussverfahren. Der Axialbereich 21 bildet in der Ebene aus FIG.2A mit seinen großen Außenseiten zwei gegenüberliegende axiale Gleitflächen zur Abstützung der Lagerringe 11, 12 in Richtung der Drehachse A. Entsprechend bildet der Radialbereich 22 an jeder großen Außenseite eine in etwa senkrecht zu den axialen Gleitflächen, in Betriebsstellung leicht gekrümmt verlaufende radiale Gleitfläche zur radialen Abstützung bzw. Lagerung.

Der Radialbereich 22 des Gleitelements 20 weist mehrere Scharnierverbindungen 23 auf, im gezeigten Beispiel zwei Scharnierverbindungen 23. Die Scharnierverbindungen 23 unterteilen den Radialbereich 22 in eine entsprechende Anzahl, hier drei, Segmente 24 und verbinden diese Segmente 24 flexibel bzw. gegeneinander beweglich. Wie in FIG.2B angedeutet, sind die Scharnierverbindungen 23 so ausgeführt, dass diese ein Abwinkeln bzw. Verbiegen der Segmente 24 gegeneinander um eine dazwischen liegende Schwenkachse S (s. FIG.2B) ermöglichen. Die Scharnierverbindungen 23 sind hierbei so ausgeführt, dass die Schwenkachse S in Betriebsstellung in etwa parallel zur Drehachse A verläuft. Hierdurch wird erreicht, dass sich das Gleitelement 20, insbesondere der Radialbereich 22, dem jeweiligen Durchmesser D (s. FIG.1A-1B) des Axial-Radial-Gleitlagers 20 anpasst. Dementsprechend kann ein Gleitelement 20 mit einer vorbestimmten Geometrie erfindungsgemäß für unterschiedliche Durchmesser D verwendet werden, bspw. für Lager mit Durchmesser D im Bereich von 500mm bis 600mm oder größer.

In der bevorzugten Ausführung nach FIG.2A-2C sind die Scharnierverbindungen 23 jeweils in der Art eines Filmscharniers hergestellt, d.h. jeweils durch eine geringere Wandstärke des Radialbereichs 22 im Übergang zwischen zwei vergleichsweise starren Segmenten 24. Andere Realisierungen von Scharnierverbindungen 23 sind jedoch nicht ausgeschlossen.

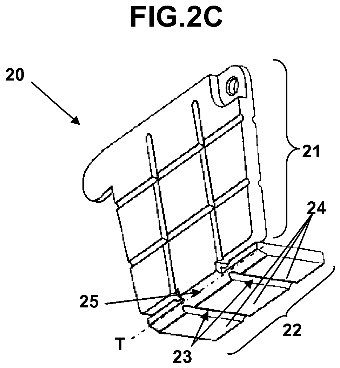

Um die Biegsamkeit der Segmente 24 relativ zueinander nicht zu beeinträchtigen, ist der Radialbereich 22 lediglich über die Abmessung eines einzigen Segments 24, hier des mittleren Segments, mit dem Axialbereich 21 verbunden. Hierzu wird, wie am besten aus FIG.2C ersichtlich, zweckmäßig eine weitere Scharnierverbindung 25 vorgesehen, so dass auch die Verbindung zwischen dem Axialbereich 21 und dem Radialbereich 22 flexibel ausgeführt ist. Die weitere Scharnierverbindung 25 gestattet ein Abwinkeln zwischen dem Axialbereich 21 und dem Radialbereich 22 um eine in FIG.2C strichpunktiert angedeutete Querachse T, welche im Wesentlichen senkrecht zu den Schwenkachsen S steht bzw. tangential zur Drehrichtung des Gleitlagers 10 verläuft.

FIG.2A-2C zeigen ferner, dass senkrecht zur Schwenkachse S der Scharnierverbindungen 23 des Radialbereichs 22 verlaufend weitere Querschnittsverringerungen 28 jeweils versetzt und parallel zur ersten Querachse T (aus FIG.2C) verlaufen. Auch senkrecht zur ersten Querachse T (aus FIG.2C) können weitere Querschnittsverringerungen vorgesehen sein, welche sich besonders einfach durch Verlängerung auf Höhe der Scharnierverbindung 23 realisieren lassen. Durch geeignete Anordnung solcher Querschnittsverringerungen 28 kann die Biegsamkeit des Axialbereichs 21 nach Bedarf und unabhängig vom Material des Gleitelements 20 angepasst werden.

Wie FIG.2A-2C zeigen, ist es zweckmäßig, den Grundriss des gesamten, flach angeordneten Gleitelements 20, zumindest aber des größtmöglichen Axialbereichs 21, gemäß einem gleichschenkligen Trapez zu gestalten. Hierbei können die zwei gleichen Schenkel, einen Winkel von weniger als 20°, vorzugsweise weniger als 15° einschließen und in Richtung zur gedachten Drehachse A hin verjüngt zulaufen. Der entsprechende halbe Winkel α ist in FIG.2A zur Veranschaulichung mit punktierten Linien angedeutet. Hierdurch wird zwischen benachbarten Axialbereichen 21 und zwischen benachbarten Radialbereichen 22 die Spaltbreite in Umfangsrichtung optimiert.

FIG.2B-2C zeigen an den äußeren Ecken der Gleitelemente 20 angeordnet einen Rasthaken 26, sowie eine zur Aufnahme des Rasthakens 26 eines benachbarten Gleitelements 20 geeignete Öse 27. Rasthaken 26 und Ösen 27 an den Gleitelementen 20 ermöglichen eine formschlüssige Verbindung benachbarter Gleitelemente 20 zur Sicherung in Umfangsrichtung bzw. tangential zur Drehachse A.

Anzumerken bleibt schließlich, dass in FIG.2A-2C eine flache, ebene Anordnung des Radialbereichs 22 gezeigt ist, wobei jedoch der Winkel zwischen den Segmenten 24 um die Schwenkachse S durch die Scharnierverbindungen 23 in einem großen Bereich frei wählbar bzw. gemäß dem Durchmesser D einstellbar ist. Aus der in FIG.2A-2C gezeigten, ebenen Anordnung ergibt sich jedoch auch die Eignung der Gleitelemente 20 für lineare Gleitlager.

### Bezugzeichenliste

10 Axial-Radial-Gleitlager
11 erster Lagerring
12 zweiter Lagerring
13 Bohrungen
20 Gleitelement
21 Axialbereich
22 Radialbereich
23 Scharnierverbindung
24 Segmente
25 Scharnierverbindung
26, 27 Formschlussverbinder
28 Querschnittsverringerung
A Drehachse
D (Innen-)Durchmesser
S Schwenkachse
T Querachse
α halber Winkel (zwischen Trapezschenkeln)

## Patentansprüche

1. Axial-Radial-Gleitlager (10) mit Polymergleitelementen (20), umfassend:
einen ersten Lagerring (11) und einen zweiten Lagerring (12), welche gegeneinander um eine Lagerachse (A) drehbar sind, wobei der zweite Lagerring (12) einen im Wesentlichen U-förmigen Querschnitt bildet, um den ersten Lagerring (11) zumindest bereichsweise aufzunehmen;
Gleitelemente (20) aus einem Polymer, insbesondere aus einem Tribopolymer, welche zwischen dem ersten und zweiten Lagerring angeordnet sind, um die Lagerringe axial und radial zu entkoppeln, wobei die Gleitelemente (20) jeweils einen im Wesentlichen L-förmigen Querschnitt aufweisen mit einem Axialbereich (21) mit axialen Gleitflächen und einem Radialbereich (22) mit radialen Gleitflächen;
**dadurch gekennzeichnet, dass**
der Radialbereich (22) der Gleitelemente (20) mindestens eine Scharnierverbindung (23) aufweist, welche zwei Segmente (24) des Radialbereichs flexibel und gegeneinander beweglich verbindet, sodass sich die Gleitelemente (20) dem jeweiligen Durchmesser (D) des Axial-Radial-Gleitlagers (20) anpassen.

2. Axial-Radial-Gleitlager nach Anspruch 1, **dadurch gekennzeichnet, dass** die Scharnierverbindung (23) filmscharnierähnlich hergestellt ist durch eine geringere Wandstärke zwischen den Segmenten (24) im Radialbereich (22).

3. Axial-Radial-Gleitlager nach Anspruch 1 oder 2, **dadurch gekennzeichnet, dass** der Radialbereich (22) der Gleitelemente mehrere Scharnierverbindungen (23) aufweist, die den Radialbereich in mehrere flexibel verbundene Segmente (24) unterteilen.

4. Axial-Radial-Gleitlager nach einem der Ansprüche 1 bis 3, **dadurch gekennzeichnet, dass** lediglich ein Segment (24) des Radialbereichs mit dem Axialbereich, vorzugsweise flexibel über eine weitere Scharnierverbindung (25), verbunden ist.

5. Axial-Radial-Gleitlager nach einem der vorstehenden Ansprüche, **dadurch gekennzeichnet, dass** zwischen den Lagerringen (11, 12) zwei gegenüberliegende Gleitringe aus einer Mehrzahl Gleitelemente (20) angeordnet sind und die Lagerringe axial und radial gegeneinander lagern.

6. Axial-Radial-Gleitlager nach einem der vorstehenden Ansprüche, **dadurch gekennzeichnet, dass** der Innendurchmesser (D) des Axial-Radial-Gleitlagers (10) mindestens 250mm, vorzugsweise mindestens 500mm beträgt.

7. Polymergleitelement (20) für ein Gleitlager, insbesondere für ein Axial-Radial-Gleitlager nach einem der Ansprüche 1 bis 6, wobei das Gleitelement (20) ein Tribopolymer umfasst und einen im Wesentlichen L-förmigen Querschnitt aufweist mit einem Axialbereich (21) mit axialen Gleitflächen und einem Radialbereich (22) mit radialen Gleitflächen;
**dadurch gekennzeichnet, dass**
der Radialbereich (22) mindestens eine Scharnierverbindung (23) aufweist, welche zwei Segmente (24) des Radialbereichs (22) flexibel und gegeneinander beweglich verbindet, sodass sich das Gleitelement (20) dem jeweiligen Gleitlager, insbesondere dem Durchmesser (D) eines Axial-Radial-Gleitlagers (20) anpassen kann.

8. Polymergleitelement (20) nach Anspruch 7, **dadurch gekennzeichnet, dass** die Scharnierverbindung (23) filmscharnierähnlich hergestellt ist durch eine geringere Wandstärke zwischen den Segmenten (24) im Radialbereich (22).

9. Polymergleitelement (20) nach Anspruch 7 oder 8,
**dadurch gekennzeichnet, dass** der Radialbereich (22) mehrere Scharnierverbindungen (23) aufweist, die den Radialbereich in mehrere flexibel verbundene Segmente (24) unterteilen.

10. Polymergleitelement (20) nach einem der Ansprüche 7 bis 9, **dadurch gekennzeichnet, dass** lediglich ein Segment (24) des Radialbereichs mit dem Axialbereich, vorzugsweise flexibel über eine weitere Scharnierverbindung (25), verbunden ist.

11. Polymergleitelement (20) nach einem der Ansprüche 7 bis 10, **dadurch gekennzeichnet, dass** die Axialbereiche (21) Verbinder, vorzugsweise an den äußeren Ecken angeordnete Formschlussverbinder (26, 27), aufweisen, um die Axialbereiche aneinander zu befestigen.

12. Polymergleitelement (20) nach einem der Ansprüche 7 bis 11, **dadurch gekennzeichnet, dass** in Querrichtung zur Schwenkachse (S) der mindestens einen Scharnierverbindung (23) des Radialbereichs (22) eine oder mehrere Querschnittsverringerungen (28) verlaufen, um die Biegsamkeit des Axialbereichs (21) zu erhöhen.

13. Polymergleitelement (20) nach einem der Ansprüche 7 bis 12, **dadurch gekennzeichnet, dass** zumindest die Axialbereiche (21) einen trapezförmigen Grundriss mit zwei gleichen Schenkeln aufweisen, die einen Winkel (2α) ≤ 20°, vorzugsweise ≤ 15° einschließen.

14. Polymergleitelement (20) für ein Gleitlager, wobei das Gleitelement (20) ein Tribopolymer umfasst und einen im Wesentlichen L-förmigen Querschnitt aufweist mit einem Axialbereich (21) mit axialen Gleitflächen und einem Radialbereich (22) mit radialen Gleitflächen, wobei der Axialbereich (21) den längeren Schenkel des L-förmigen Querschnitts und der Radialbereich (22) den kürzeren Schenkel des L-förmigen Querschnitts bildet, **dadurch gekennzeichnet, dass**
der Axialbereich (21) und der Radialbereich (22) biegsam sind und dass der Radialbereich (22) eine höhere Flexibilität aufweist als der Axialbereich (21) und Segmente (24) aufweist welche gegeneinander beweglich sind, sodass sich das Gleitelement (20) dem Durchmesser (D) eines Axial-Radial-Gleitlagers (20) anpassen kann.

15. Polymergleitelement (20) nach Anspruch 14, **dadurch gekennzeichnet, dass** der Radialbereich (22) einstückig hergestellt ist, insbesondere aus einem Tribopolymer, und eine reduzierte Wandstärke im Vergleich zur übrigen Wandstärke im Axialbereich (21) aufweist.

16. Polymergleitelement (20) nach Anspruch 14 oder 15, **dadurch gekennzeichnet, dass** der Radialbereich (22) mehrere Scharnierverbindungen (23) aufweist, die den Radialbereich in mehrere flexibel verbundene Segmente (24) unterteilen.

17. Polymergleitelement (20) nach Anspruch 16, **dadurch gekennzeichnet, dass** lediglich ein Segment (24) des Radialbereichs (22) flexibel über eine weitere Scharnierverbindung (25) mit dem Axialbereich (21) verbunden ist.

18. Polymergleitelement (20) nach Anspruch 14, **dadurch gekennzeichnet, dass** lediglich ein Segment (24) des Radialbereichs (22) mit dem Axialbereich (21) verbunden ist.

## Claims

1. Axial-radial sliding bearing (10) with polymer sliding elements (20), comprising:
a first bearing race (11) and a second bearing race (12) which are rotatable oppositely to each other about a bearing shaft (A), wherein the second bearing race (12) defines a substantially U-shaped cross section for receiving the first bearing race (11) at least in certain regions;
sliding elements (20) made from a polymer, in particular from a tribopolymer, which are arranged between the first and the second bearing races for uncoupling the bearing races axially and radially, wherein the sliding elements (20) each have a substantially L-shaped cross section comprising an axial region (21) having axial sliding surfaces and a radial region (22) having radial sliding surfaces; **characterized in that**
the radial region (22) of the sliding elements (20) includes at least one hinge connection (23), which connects two segments (24) of the radial region in a flexible manner and so as to be movable oppositely to each other so that the sliding elements (20) are adapted to the respective diameter (D) of the axial-radial sliding bearing (10).

2. Axial-radial sliding bearing according to claim 1, **characterized in that** the hinge connection (23) is produced similar to a living hinge by a diminished wall thickness between the segments (24) in the radial region (22).

3. Axial-radial sliding bearing according to claim 1 or 2, **characterized in that** the radial region (22) of the sliding elements includes several hinge connections (23) that subdivide the radial region into several flexibly connected segments (24).

4. Axial-radial sliding bearing according to one of the claims 1 to 3, **characterized in that** only one segment (24) of the radial region is connected to the axial region in a preferably flexible manner via a further hinge connection (25).

5. Axial-radial sliding bearing according to one of the preceding claims, **characterized in that** between the bearing races (11, 12) two opposing sliding rings composed of a plurality of sliding elements (20) are arranged, and that the bearing races are axially and radially supported one against the other.

6. Axial-radial sliding bearing according to one of the preceding claims, **characterized in that** the inner diameter (D) of the axial-radial sliding bearing (10) amounts to 250 mm at minimum, preferably to 500 mm at minimum.

7. Polymer sliding element (20) for a sliding bearing, particularly for an axial-radial sliding bearing according to one of the claims 1 to 6, wherein the sliding element (20) includes a tribopolymer and has a substantially L-shaped cross section comprising an axial region (21) having axial sliding surfaces and a radial region (22) having radial sliding surfaces; **characterized in that**
the radial region (22) includes at least one hinge connection (23), which connects two segments (24) of the radial region (22) in a flexible manner and so as to be movable oppositely to each other so that the sliding element (20) can be adapted to the respective sliding bearing, particularly to the diameter (D) of an axial-radial sliding bearing (10).

8. Polymer sliding element (20) according to claim7, **characterized in that** the hinge connection (23) is produced in the manner of a living hinge by a diminished wall thickness between the segments (24) in the radial region (22).

9. Polymer sliding element (20) according to claim 7 or 8, **characterized in that** the radial region (22) includes several hinge connections (23) that subdivide the radial region into several flexibly connected segments (24).

10. Polymer sliding element (20) according to one of the claims 7 to 9, **characterized in that** only one segment (24) of the radial region is connected to the axial region in a preferably flexible manner via a further hinge connection (25).

11. Polymer sliding element (20) according to one of the claims 7 to 10, **characterized in that** the axial regions (21) present connectors, preferably form-fit connectors (26, 27) arranged on the outer corners, for fixing the axial regions to each other.

12. Polymer sliding element (20) according to one of the claims 7 to 11, **characterized in that** for increasing the bendability of the axial region (21), one or several diminishments of the cross section (28) proceed in the transverse direction to the pivot axis (S) of the at least one hinge connection (23) of the radial region (22).

13. Polymer sliding element (20) according to one of the claims 7 to 12, **characterized in that** at least the axial regions (21) have a trapezoidal layout with two equal sides that include an angle (2α) of ≤ 20°, preferably ≤ 15°.

14. Polymer sliding element (20) for a sliding bearing, wherein the sliding element (20) includes a tribopolymer and has a substantially L-shaped cross section comprising an axial region (21) having axial sliding surfaces and a radial region (22) having radial sliding surfaces, wherein the axial region (21) forms the longer side of the L-shaped cross section and the radial region (22) forms the shorter side of the L-shaped cross section; **characterized in that** the axial region (21) and the radial region (22) are bendable and that the radial region (22) exhibits a flexibility which is higher than in the axial region (21) and has segments (24) that are movable mutually oppositely to each other so that the sliding element (20) can be adapted to the diameter (D) of an axial-radial sliding bearing (10).

15. Polymer sliding element (20) according to claim 14, **characterized in that** the radial region (22) is integrally made, in particular from a tribopolymer, and has a diminished strength of material compared to the axial region (21).

16. Polymer sliding element (20) according to claim 14 or 15, **characterized in that** the radial region (22) includes several hinge connections (23) that subdivide the radial region into several flexibly connected segments (24).

17. Polymer sliding element (20) according to claim 16, **characterized in that** only one segment (24) of the radial region (22) is flexibly connected to the axial region (21) via a further hinge connection (25).

18. Polymer sliding element (20) according to claim 14, **characterized in that** only one segment (24) of the radial region (21) is connected to the axial region (21).

## Revendications

1. Palier lisse axial-radial (10) avec des éléments coulissants en polymère (20), comprenant:
une première bague de roulement (11) et une deuxième bague de roulement (12) qui peuvent tourner l'une autour de l'autre autour d'un axe de roulement (A), la deuxième bague de roulement (12) définissant une section transversale sensiblement en forme de U afin de recevoir la première bague de roulement (11) au moins en partie;
des éléments coulissants (20) en polymère, en particulier faits à base d'un tribopolymère, qui sont disposés entre les première et deuxième bagues de roulement pour découpler les bagues de roulement axialement et radialement, les éléments coulissants (20) ayant chacun une section transversale sensiblement en forme de L qui est dotée d'une région axiale (21) ayant des surfaces de glissement axiales et d'une région radiale (22) ayant des surfaces de glissement radiales;
**caractérisé en ce que**
la région radiale (22) des éléments coulissants (20) comprend au moins une liaison charnière (23) reliant deux segments (24) de la région radiale de manière flexible et de manière à être mobiles l'un par rapport à l'autre, de sorte que les éléments coulissants (20) s'adaptent au diamètre (D) respectif du palier lisse axial-radial (10).

2. Palier lisse axial-radial selon la revendication 1, **caractérisé en ce que** la liaison charnière (23) est réalisée de manière similaire à une charnière active par une épaisseur de paroi diminuée entre les segments (24) dans la région radiale (22).

3. Palier lisse axial-radial selon la revendication 1 ou 2, **caractérisé en ce que** la région radiale (22) des éléments coulissants comprend plusieurs liaisons charnière (23) qui subdivisent la région radiale en plusieurs segments (24) reliés de manière flexible.

4. Palier lisse axial-radial selon l'une quelconque des revendications 1 à 3, **caractérisé en ce qu'**un seul segment (24) de la région radiale est relié de préférence à la région axiale par une liaison charnière supplémentaire (25).

5. Palier lisse axial-radial selon l'une quelconque des revendications précédentes, **caractérisé en ce qu'**entre les bagues de roulement (11, 12) sont disposés deux bagues coulissantes opposées qui sont constituées d'une pluralité d'éléments coulissants (20), et **en ce que** les bagues de roulement sont axialement et radialement supportés l'une contre l'autre.

6. Palier lisse axial-radial selon l'une quelconque des revendications précédentes, **caractérisé en ce que** le diamètre interne (D) du palier lisse (10) axial-radial est au minimum de 250 mm, de préférence de 500 mm au minimum.

7. Elément coulissant en polymère (20) pour un palier lisse, en particulier pour un palier lisse axial-radial selon l'une des revendications 1 à 6, dans lequel l'élément coulissant (20) comprend un tribopolymère et présente une section transversale sensiblement en forme de L dotée d'une région (21) ayant des surfaces de glissement axiales et d'une région radiale (22) ayant des surfaces de glissement radiales;
**caractérisé en ce que**
la région radiale (22) comprend au moins une liaison charnière (23) reliant deux segments (24) de la région radiale de manière flexible et de manière à être mobiles l'un par rapport à l'autre, de sorte que l'élément coulissant (20) peut s'adapter au palier lisse respectif, en particulier au diamètre (D) d'un palier lisse axial-radial (10).

8. Elément coulissant en polymère (20) selon la revendication 7, **caractérisé en ce que** la liaison charnière (23) est réalisée de manière similaire à une charnière active par une épaisseur de paroi diminuée entre les segments (24) dans la région radiale (22).

9. Elément coulissant en polymère (20) selon la revendication 7 ou 8, **caractérisé en ce que** la région radiale (22) comprend plusieurs liaisons charnière (23) qui subdivisent la région radiale en plusieurs segments (24) reliés de manière flexible.

10. Elément coulissant en polymère (20) selon l'une quelconque des revendications 7 à 9, **caractérisé en ce qu'**un seul segment (24) de la région radiale est relié de préférence à la région axiale par une liaison charnière supplémentaire (25).

11. Elément coulissant en polymère (20) selon l'une quelconque des revendications 7 à 10, **caractérisé en ce que** les régions axiales (21) présentent des connecteurs, de préférence des connecteurs (26, 27) à conjugaison de forme, disposés sur les coins extérieurs, pour la fixation les régions axiales les unes aux autres.

12. Elément coulissant en polymère (20) selon l'une quelconque des revendications 7 à 11, **caractérisé en ce que** pour augmenter la flexibilité de la région axiale (21), une ou plusieurs diminutions de la section transversale (28) se font dans la direction transversale à la l'axe de pivotement (S) de l'au moins une liaison d'articulation (23) de la région radiale (22).

13. Elément coulissant en polymère (20) selon l'une quelconque des revendications 7 à 12, **caractérisé en ce qu'**au moins les régions axiales (21) présentent une disposition trapézoïdale avec deux côtés égaux qui comprendnt un angle (2α) ≤ 20 °, de préférence ≤ 15 °.

14. Élément coulissant en polymère (20) pour palier lisse, dans lequel l'élément coulissant (20) comprend un tribopolymère et présente une section sensiblement en forme de L comprenant une région axiale (21) présentant des surfaces de glissement axiales et une région radiale (22) radiale des surfaces de glissement, dans lesquelles la région axiale (21) forme le côté le plus long de la section transversale en forme de L et la région radiale (22) forme le côté le plus court de la section transversale en forme de L;
**caractérisé en ce que**
la région axiale (21) et la région radiale (22) sont flexibles et que la région radiale (22) présente une flexibilité supérieure à celle de la région axiale (21) et comprend des segments (24) mobiles l'un par rapport à l'autre de sorte que l'élément coulissant (20) peut s'adapter au diamètre (D) d'un palier lisse axial-radial (10).

15. Elément coulissant en polymère (20) selon la revendication 14, **caractérisé en ce que** la région radiale (22) est réalisée intégralement, notamment à base d'un tribopolymère, et présente une épaisseur de paroi réduite par rapport à la région axiale (21).

16. Elément coulissant en polymère (20) selon la revendication 14 ou 15, **caractérisé en ce que** la région radiale (22) comprend plusieurs liaisons charnière (23) qui subdivisent la région radiale en plusieurs segments (24) reliés de manière flexible.

17. Elément coulissant en polymère (20) selon la revendication 16, **caractérisé en ce qu'**un seul segment (24) de la région radiale (22) est relié de manière flexible à la région axiale (21) par une liaison charnière supplémentaire (25).

18. Elément coulissant en polymère (20) selon la revendication 14, **caractérisé en ce qu'**un seul segment (24) de la région radiale (21) est relié à la région axiale (21).
